(19) **Europäisches Patentamt / European Patent Office / Office européen des brevets**

(11) **EP 4 700 856 A1**

(12) # EUROPEAN PATENT APPLICATION
published in accordance with Art. 153(4) EPC

(43) Date of publication:
**25.02.2026 Bulletin 2026/09**

(21) Application number: **23933456.8**

(22) Date of filing: **20.04.2023**

(51) International Patent Classification (IPC):
**H01M 4/36** (2006.01)  **H01M 4/505** (2010.01)

(52) Cooperative Patent Classification (CPC):
**Y02E 60/10**

(86) International application number:
**PCT/CN2023/089489**

(87) International publication number:
**WO 2024/216580 (24.10.2024 Gazette 2024/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Ningde Amperex Technology Limited Ningde, Fujian 352100 (CN)**

(72) Inventor: **YUE, Yingying Ningde, Fujian 352100 (CN)**

(74) Representative: **Kraus & Lederer PartGmbB Thomas-Wimmer-Ring 15 80539 München (DE)**

(54) **POSITIVE ELECTRODE MATERIAL, POSITIVE ELECTRODE SHEET, SODIUM-ION SECONDARY BATTERY, AND ELECTRIC DEVICE**

(57) This application provides a positive electrode material, a positive electrode plate, a sodium-ion secondary battery, and an electrical device. The positive electrode material includes a matrix material $Na_xNi_aFe_bMn_cM_dO_2$. A surface of the matrix material includes a polyanionic material. The polyanionic material includes at least one of a phosphate compound, a NASICON compound, a pyrophosphate compound, or a fluorinated phosphate compound. In the matrix material $Na_xNi_aFe_bMn_cM_dO_2$, M includes at least one of Co, Mg, Ca, B, Al, Zr, Ti, W, Mo, Cr, Sr, Y, Cd, Sn, Sb, Ce, Li, K, Zn, La, F, Si, or P, $0.7 \leq x < 1.0$, $0.2 < a \leq 0.5$, $0.2 < b \leq 0.5$, $0.2 < c \leq 0.7$, $0 \leq d \leq 0.2$, $0.7 \leq x/(a + b + c + d) < 1.0$. Based on a mass of the positive electrode material, a mass percent of the polyanionic material is 1% to 10%. The positive electrode material in the secondary battery provided herein satisfies the above characteristics, and can improve the electrochemical performance of the sodium-ion secondary battery.

1 µm   EHT = 10.00 kV   Signal A = InLens
WD = 4.1 mm   Mag = 10.00 K X   ZEISS

FIG. 2

EP 4 700 856 A1

## Description

### TECHNICAL FIELD

This application relates to the field of electrochemical technology, and in particular, to a positive electrode material, a positive electrode plate, a sodium-ion secondary battery, and an electrical device.

### BACKGROUND

In recent years, secondary batteries such as a sodium-ion secondary battery system have attracted extensive attention by virtue of richness of resources, cost-effectiveness, environment-friendliness, and electrochemical properties similar to those of lithium-ion batteries, and provide a new option for electrochemical energy storage, especially large-scale energy storage.

Layered transition metal oxides are a desirable positive electrode material characterized by a high energy density. However, the air stability of the layered transition metal oxides is low. When stored in an environment at a relative humidity such as RH50% or above, the material is less stable, thereby impairing the electrochemical performance.

Therefore, a new positive electrode material based on the layered transition metal oxides is urgently needed to improve the stability of the material and the electrochemical performance of secondary batteries.

### SUMMARY

An objective of this application is to provide a positive electrode material, a positive electrode plate, a sodium-ion secondary battery, and an electrical device to improve the electrochemical performance of the sodium-ion secondary battery. Specific technical solutions are as follows:

A first aspect of this application provides a positive electrode material. The positive electrode material includes a matrix material $Na_xNi_aFe_bMn_cM_dO_2$. A surface of the matrix material includes a polyanionic material. The polyanionic material includes at least one of a phosphate compound, a NASICON compound, a pyrophosphate compound, or a fluorinated phosphate compound. In the matrix material $Na_xNi_aFe_bMn_cM_dO_2$, M includes at least one of Co, Mg, Ca, B, Al, Zr, Ti, W, Mo, Cr, Sr, Y, Cd, Sn, Sb, Ce, Li, K, Zn, La, F, Si, or P, $0.7 \leq x < 1.0$, $0.2 < a \leq 0.5$, $0.2 < b \leq 0.5$, $0.2 < c \leq 0.7$, $0 \leq d \leq 0.2$, $0.7 \leq x/(a+b+c+d) < 1.0$. Based on a mass of the positive electrode material, a mass percent of the polyanionic material is 1% to 10%. By controlling the types of the matrix material and the polyanionic material in the positive electrode material, and by controlling the mass percent of the polyanionic material to fall within the range specified herein, the positive electrode material is endowed with a relatively high specific capacity, thereby improving the electrochemical performance of the sodium-ion secondary battery.

In some embodiments of this application, a specific surface area of the positive electrode material is BET $m^2/g$, satisfying: $0.2 \leq BET \leq 20$. By controlling the value of BET to fall within the above range, on the one hand, the contact area between the positive electrode material and air is reduced, thereby reducing the hygroscopicity of the positive electrode material. On the other hand, the contact area between the positive electrode material and the electrolyte solution is reduced, thereby reducing side reactions between the positive electrode material and the electrolyte solution, and reducing the gas production of the sodium-ion secondary battery.

In some embodiments of this application, a pH value of the positive electrode material is 6 to 12. By controlling the pH value of the positive electrode material to fall within the above range, the content of residual sodium ($Na_2CO_3$/NaHCO_3$/NaOH) in the positive electrode material can be reduced, thereby reducing the reaction between residual sodium and hydrofluoric acid (HF) in the electrolyte solution, and reducing the gas production amount.

In some embodiments of this application, at least a part of the surface of the matrix material is coated with the polyanionic material. A coating rate of the polyanionic material on the matrix material is greater than or equal to 80%, thereby making the coated matrix material more stable to air, and increasing the specific discharge capacity of the matrix material.

In some embodiments of this application, the matrix material is spherical or quasi-spherical secondary particles. By selecting the matrix material that falls within the above range, this application can increase the energy density of the matrix material. A secondary particle is formed of primary particles. The smaller the primary particles, the shorter the migration path of $Na^+$, which is more conducive to achieving a higher specific capacity. In addition, the secondary particles formed by closely packed primary particles exhibit a high tap density, thereby improving the compaction density of the matrix material. The energy density of the matrix material is positively correlated with the specific capacity and the compaction density.

In some embodiments of this application, the matrix material is monocrystalline or quasi-monocrystalline primary particles. By selecting the matrix material that falls within the above range, this application can reduce grain boundaries, thereby reducing cracking at the grain boundaries during cycling, and improving the cycle performance of the sodium-ion secondary battery.

In some embodiments of this application, a particle diameter D of primary particles of the polyanionic material is 20 nm to 200 nm, thereby increasing the charging and discharging speed, exerting the electrochemical performance of the matrix material more sufficiently, and ensuring an appropriate coating rate of the polyanionic material on the matrix material.

In some embodiments of this application, the positive electrode material satisfies at least one of the following characteristics: a) $0.65 \leq BET \leq 10$; b) a coating rate of the polyanionic material on the matrix material is greater than or equal to 90%; or, c) a particle diameter D of primary particles of the polyanionic material is 20 nm to 100 nm.

In some embodiments of this application, the phosphate compound includes $NaRPO_4$, where R is selected from Fe or Mn; the NASICON compound includes $Na_yQ_2(XO_4)_3$, where $1 \leq y \leq 4$, Q includes at least one of V, Fe, Ni, Mn, or Ti, and X includes at least one of P, S, or Si; the pyrophosphate compound includes $Na_mZ(PO_4)_n(P_2O_7)_q$, where $2 \leq m < 10$, $0 \leq n \leq 4$, $1 \leq q < 10$, and Z includes at least one of Fe, Mn, or Co; and the fluorinated phosphate compound includes at least one of $NaVPO_4F$ or $Na_3(VO_{1-w}PO_4)_2F_{1+2w}$, where $0 \leq w \leq 1$. By using the phosphate compound falling within the above range, the matrix material is more stable to the environment, and the impact on the deintercalation of $Na^+$ of the matrix material is smaller during charging and discharging. By using the NASICON compound falling within the above range, not only the matrix material is more stable to the environment, but also the impact on the ionic conductivity of the matrix material is smaller, and the thermal stability of the matrix material is improved. By using the pyrophosphate compound falling within the above range, the matrix material is more stable to the environment, and the cycle performance and thermal stability of the positive electrode material are improved. By using the fluorinated phosphate compound falling within the above range, not only the matrix material is more stable to air, but also the impact on the energy density of the matrix material is smaller.

A second aspect of this application provides a positive electrode plate. The positive electrode plate includes the positive electrode material according to any one of the foregoing embodiments. Therefore, the positive electrode plate according to this application is of high electronic conductivity and ionic conductivity.

In some embodiments of this application, a compaction density of the positive electrode plate is CD $g/cm^3$, satisfying: $CD \geq 2.7$. By controlling the compaction density of the positive electrode plate to fall within the above range, a sodium-ion secondary battery of a high energy density can be obtained favorably.

A third aspect of this application provides a sodium-ion secondary battery. The sodium-ion secondary battery includes the positive electrode plate according to any one of the foregoing embodiments. Therefore, the sodium-ion secondary battery according to this application achieves good electrochemical performance.

A fourth aspect of this application provides an electrical device. The electrical device includes the sodium-ion secondary battery according to any one of the foregoing embodiments. Therefore, the electrical device according to this application achieves good operating performance.

Some of the beneficial effects of this application are as follows:

This application provides a positive electrode material, a positive electrode plate, a sodium-ion secondary battery, and an electrical device. The positive electrode material includes a matrix material $Na_xNi_aFe_bMn_cM_dO_2$. A surface of the matrix material includes a polyanionic material. The polyanionic material includes at least one of a phosphate compound, a NASICON compound, a pyrophosphate compound, or a fluorinated phosphate compound. In the matrix material $Na_xNi_aFe_bMn_cM_dO_2$, M includes at least one of Co, Mg, Ca, B, Al, Zr, Ti, W, Mo, Cr, Sr, Y, Cd, Sn, Sb, Ce, Li, K, Zn, La, F, Si, or P, $0.7 \leq x < 1.0$, $0.2 < a \leq 0.5$, $0.2 < b \leq 0.5$, $0.2 < c \leq 0.7$, $0 \leq d \leq 0.2$, $0.7 \leq x/(a+b+c+d) < 1.0$. Based on a mass of the positive electrode material, a mass percent of the polyanionic material is 1% to 10%. By controlling the types of the matrix material and the polyanionic material in the positive electrode material, and by controlling the mass percent of the polyanionic material to fall within the range specified herein, the positive electrode material is endowed with a relatively high specific capacity, thereby improving the electrochemical performance of the sodium-ion secondary battery.

Definitely, a single product or method in which the technical solution of this application is implemented does not necessarily achieve all of the above advantages concurrently.

## BRIEF DESCRIPTION OF DRAWINGS

The drawings described herein are intended to enable a further understanding of this application, and constitute a part of this application. The exemplary embodiments of this application and the description thereof are intended to explain this application but not to constitute any undue limitation on this application.

FIG. 1 is a scanning electron microscope image of a matrix material according to Embodiment 1;
FIG. 2 is a scanning electron microscope image of a matrix material with a surface containing a polyanionic material according to Embodiment 1; and
FIG. 3 is a comparison chart of a water absorption amount and a degradation degree of a matrix material with a surface containing no polyanionic material versus a matrix material with a surface containing a polyanionic material according to Embodiment 1.

**DETAILED DESCRIPTION**

To make the objectives, technical solutions, and advantages of this application clearer, the following describes this application in more detail with reference to drawings and embodiments. Evidently, the described embodiments are merely a part of but not all of the embodiments of this application. All other embodiments derived by a person of ordinary skill in the art based on the embodiments of this application without making any creative efforts fall within the protection scope of this application.

A first aspect of this application provides a positive electrode material. The positive electrode material includes a matrix material $Na_xNi_aFe_bMn_cM_dO_2$. A surface of the matrix material includes a polyanionic material. The polyanionic material includes at least one of a phosphate compound, a NASICON compound, a pyrophosphate compound, or a fluorinated phosphate compound. In the matrix material $Na_xNi_aFe_bMn_cM_dO_2$, M includes at least one of Co, Mg, Ca, B, Al, Zr, Ti, W, Mo, Cr, Sr, Y, Cd, Sn, Sb, Ce, Li, K, Zn, La, F, Si, or P, $0.7 \leq x < 1.0$, $0.2 < a \leq 0.5$, $0.2 < b \leq 0.5$, $0.2 < c \leq 0.7$, $0 \leq d \leq 0.2$, $0.7 \leq x/(a + b + c + d) < 1.0$. Based on a mass of the positive electrode material, a mass percent of the polyanionic material is 1% to 10%. Specifically, the mass percent of the polyanionic material may be 1%, 2%, 3%, 4%, 5%, 6%, 7%, 8%, 9%, 10%, or a value falling within a range formed by any two thereof. Without being limited to any theory, when the mass percent of the polyanionic material is excessively low (for example, lower than 1%), the polyanionic material is unable to effectively exist on the surface of the matrix material, unable to effectively isolate the matrix material from the air, and unable to effectively improve the stability of the matrix material. When the mass percent of the polyanionic material is excessively high (for example, higher than 10%), the energy density of the sodium-ion secondary battery is impaired. By controlling the mass percent of the polyanionic material to fall within the above range, this application can effectively isolate the matrix material from air, and improve the stability of the material, thereby improving the electrochemical performance of the sodium-ion secondary battery.

The applicant hereof finds that when the surface of the matrix material contains the polyanionic material, the contact area between the matrix material and the air can be minimized to isolate the matrix material from $H_2O$ and $CO_2$ in the air. Two main reasons for this are as follows: First, the polyanionic material itself is not sensitive to humidity, and the impact of $H_2O$ and $CO_2$ in the air on the polyanionic material is negligible. Moreover, the polyanionic material is a positive electrode material of sodium-ion secondary batteries, and can undergo normal deintercalation of $Na^+$, thereby causing little impact on the $Na^+$ deintercalation of the matrix material, and improving the performance of the matrix material while causing little impact on the specific capacity of the matrix material. Second, the polyanionic material itself is of good thermal stability. When the surface of the matrix material contains the polyanionic material, the thermal stability of the matrix material can also be improved.

In the positive electrode material of this application, the surface of the matrix material $Na_xNi_aFe_bMn_cM_dO_2$ contains the polyanionic material. That is because the polyanionic material is also a positive electrode material of sodium-ion secondary batteries and is electronically conductive and ionically conductive, and brings little impact on the electronic conductivity and ionic conductivity of the matrix material. The polyanionic material contained in the surface of the matrix material implements more effective isolation between the matrix material and air, thereby improving the air stability. In addition, the polyanionic material enables deintercalation of $Na^+$, and can function as a positive active material, thereby bringing little impact on the exertion of the specific capacity of the matrix material. In addition, the polyanionic material is also conducive to reducing the gas production of the sodium-ion secondary battery. On the one hand, that is because the strong covalent bond between X and O in the polyanion stabilizes the O in the lattice and prevents release of oxygen. Therefore, the sodium-ion secondary battery is prevented from oxidizing the electrolyte solution to cause gas production when charged to a high voltage state. On the other hand, the matrix material itself releases oxygen and oxidizes the electrolyte solution to cause gas production. The polyanionic material isolates the contact area between the electrolyte solution and the matrix material to some extent, thereby reducing gas production.

Based on the above findings, in the positive electrode material of this application, the surface of the matrix material $Na_xNi_aFe_bMn_cM_dO_2$ contains a polyanionic material, and the mass percent of the polyanionic material is controlled to fall within the range specified herein, thereby improving the electrochemical performance of the sodium-ion secondary battery.

In some embodiments of this application, a specific surface area of the positive electrode material is BET $m^2/g$, satisfying: $0.2 \leq BET \leq 20$. As an example, the value of BET may be 0.2, 0.4, 0.6, 0.8, 1, 2, 3, 4, 5, 6, 7, 8, 9, 10, 11, 12, 13, 14, 15, 16, 17, 18, 19, 20, or a value falling within a range formed by any two thereof. In some embodiments of this application, $0.65 \leq BET \leq 10$. By controlling the value of BET to fall within the above range, on the one hand, the contact area between the positive electrode material and air is reduced, thereby reducing the hygroscopicity of the positive electrode material. On the other hand, the contact area between the positive electrode material and the electrolyte solution is reduced, thereby reducing side reactions between the positive electrode material and the electrolyte solution, and reducing the gas production of the sodium-ion secondary battery.

In some embodiments of this application, a pH value of the positive electrode material is 6 to 12. As an example, the pH value may be 6, 6.5, 7, 7.5, 8, 8.5, 9, 9.5, 10, 10.5, 11, 11.5, 12, or a value falling within a range formed by any two thereof. By controlling the pH value of the positive electrode material to fall within the above range, the content of residual sodium ($Na_2CO_3$/$NaHCO_3$/NaOH) in the positive electrode material can be reduced, thereby reducing the reaction between residual sodium and hydrofluoric acid (HF) in the electrolyte solution, and reducing the gas production amount.

In some embodiments of this application, at least a part of the surface of the matrix material is coated with the polyanionic material. The coating rate of the polyanionic material on the matrix material is greater than or equal to 80%. As an example, the coating rate of the polyanionic material on the matrix material may be 80%, 82%, 84%, 86%, 88%, 90%, 92%, 94%, 96%, 98%, 100%, or a value falling within a range formed by any two thereof. In some embodiments of this application, the coating rate of the polyanionic material on the matrix material is greater than or equal to 90%. Apart of the surface of the matrix material may contain the polyanionic material, or the entire surface of the matrix material contains the polyanionic material. By controlling the coating rate of the polyanionic material on the matrix material to fall within the above range, the contact area between the matrix material and air is made to be relatively small, and therefore, the coated matrix material is more stable to air, the matrix material stored in the air is less hygroscopic, the content of $Na^+$ in the product of reaction between $H_2O$ and $CO_2$ in the air is lower, the amount of $Na^+$ precipitated from the bulk phase of the matrix material is smaller, and the specific discharge capacity of the matrix material is higher.

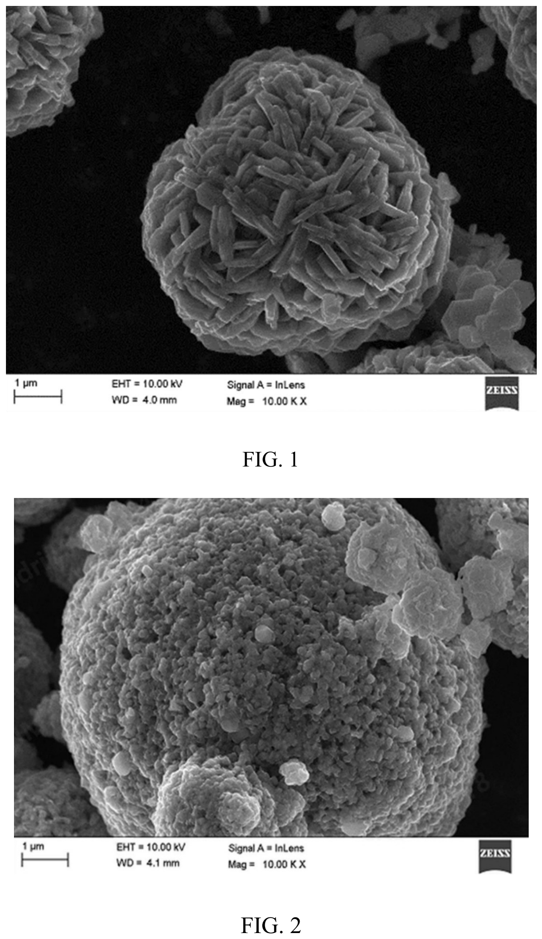

In some embodiments of this application, the matrix material is spherical or quasi-spherical secondary particles. As shown in FIG. 1, the matrix material in the figure is quasi-spherical secondary particles. By selecting the matrix material that falls within the above range, this application can increase the energy density of the matrix material. A secondary particle is formed of primary particles. The smaller the primary particles, the shorter the migration path of $Na^+$, which is more conducive to achieving a higher specific capacity. In addition, the secondary particles formed by closely packed primary particles exhibit a high tap density, thereby improving the compaction density of the matrix material. The energy density of the matrix material is positively correlated to the specific capacity and the compaction density.

In some embodiments of this application, the matrix material is monocrystalline or quasi-monocrystalline primary particles. By selecting the matrix material that falls within the above range, this application can reduce grain boundaries, thereby reducing cracking at the grain boundaries during cycling, and improving the cycle performance of the sodium-ion secondary battery.

In some embodiments of this application, the particle diameter D of primary particles of the polyanionic material is 20 $\mu$m to 200 $\mu$m. As an example, D may be D can be 20 nm, 40 nm, 60 nm, 80 nm, 100 nm, 120 nm, 140 nm, 160 nm, 180 nm, 200 nm, or a value falling within a range formed by any two thereof. In some embodiments of this application, D is 20 nm to 100 nm. By controlling the value of D to fall within the above range, the migration path of $Na^+$ can be shortened, thereby increasing the charging and discharging speed. This is also conducive to exerting the electrochemical performance of the polyanionic material and the electrochemical performance of the matrix material. In addition, the polyanionic material layer formed by the polyanionic material can be thinner while coating the matrix material at still a high coating rate.

In some embodiments of this application, the phosphate compound includes $NaRPO_4$, where R is selected from Fe or Mn; the NASICON compound includes $Na_yQ_2(XO_4)_3$, where $1 \leq y \leq 4$, Q includes at least one of V, Fe, Ni, Mn, or Ti, and X includes at least one of P, S, or Si; the pyrophosphate compound includes $Na_mZ(PO_4)_n(P_2O_7)_q$, where $2 \leq m < 10$, $0 \leq n \leq 4$, $1 \leq q < 10$, and Z includes at least one of Fe, Mn, or Co; and the fluorinated phosphate compound includes at least one of $NaVPO_4F$ or $Na_3(VO_{1-w}PO_4)_2F_{1+2w}$, where $0 \leq w \leq 1$. By using the phosphate compound falling within the above range, the matrix material is more stable to the environment, and the impact on the deintercalation of $Na^+$ of the matrix material is smaller during charging and discharging. NASICON is natrium superionic conductor, and the NASICON compound possesses an open three-dimensional framework structure, a high ionic conductivity, and good thermal stability. By using the NASICON compound falling within the above range, not only the matrix material is more stable to the environment, but also the impact on the ionic conductivity of the matrix material is smaller, and the thermal stability of the matrix material is improved. The pyrophosphate compound possesses good structural stability, thermal stability, and high fluidity of sodium ions. By using the pyrophosphate compound falling within the above range, not only the matrix material is more stable to the environment, but also the cycle performance and thermal stability of the positive electrode material are improved. The fluorinated phosphate compound is highly stable to air. The F of relatively high electronegativity introduced into a material is typically used for replacing the O in $PO_4^{3-}$ to enhance the inducing effect of the phosphate ion and increase the voltage. By using the fluorinated phosphate compound that falls within the above range, the material possesses a relatively high voltage plateau. When the surface of the matrix material contains a fluorinated phosphate compound, the compound not only improves the stability of the matrix material to air, but also brings little impact on the energy density of the matrix material.

In an embodiment of this application, the polyanionic material forms a polyanionic material layer on the surface of the matrix material. The thickness of the polyanionic material layer is 0.05 $\mu$m to 5 $\mu$m, thereby improving the coating rate on the matrix material, facilitating electron transport, and in turn, improving the kinetic performance of the sodium-ion secondary battery. The number of the polyanionic material layers is not particularly limited herein, as long as the objectives of this application can be achieved. For example, there may be one or more polyanionic material layers. When there are a plurality of polyanionic material layers, the thickness of the polyanionic material layer is the total thickness of the plurality of polyanionic material layers.

The method for preparing the positive electrode material is not particularly limited herein, as long as the objectives of this application can be achieved. As an example, a method for preparing the positive electrode material may include, but is not limited to, the following steps:

Weighing out feedstocks of the matrix material at a stoichiometric ratio, mixing the feedstocks of the matrix material, and then grinding the feedstocks evenly, calcining the feedstocks at a temperature of 800 °C to 1000 °C for 12 h to 14 h, and then pulverizing the calcined product to obtain a matrix material;

Weighing out feedstocks of the polyanionic material at a stoichiometric ratio, mixing the feedstocks of the polyanionic material evenly, and then adding the matrix material, further stirring mixture, and then performing drying, sintering, and grinding to obtain a positive electrode material.

The mixing method is not particularly limited herein, as long as the objectives of this application can be achieved. For example, the mixing method may be wet mixing such as wet ball milling. When the mixing method is wet ball milling, the ball milling time may be 3 h to 5 h, the rotation speed of the ball mill may be 200 r/min to 400 r/min, and the ball mill medium may be acetone or ethanol. The sintering method is not particularly limited herein. For example, the sintering may be performed in a vacuum tube furnace filled with nitrogen, the sintering temperature may be 350 °C to 800 °C, and the sintering time may be 6 h to 24 h.

Generally, the specific surface area of the positive electrode material and the coating rate of the polyanionic material on the matrix material may be adjusted by adjusting the grinding time of the mixture in which the matrix material and the polyanionic material are added. For example, the grinding time may be increased to reduce the specific surface area; the grinding time may be reduced to increase the specific surface area; the grinding time may be increased to increase the coating rate of the polyanionic material on the matrix material; and the grinding time may be reduced to reduce the coating rate of the polyanionic material on the matrix material. The pH value of the positive electrode material may be controlled by adjusting both the grinding time of the mixture in which the matrix material and the polyanionic material are added and the mass ratio of the matrix material to the polyanionic material. The particle diameter D of primary particles of the polyanionic material may be controlled by adjusting the sintering temperature and the sintering time. For example, increasing the sintering temperature and sintering time can increase the particle diameter D of the primary particles of the polyanionic material; and reducing the sintering temperature and the sintering time can reduce the particle diameter D of the primary particles of the polyanionic material.

A second aspect of this application provides a positive electrode plate. The positive electrode plate includes the positive electrode material according to any one of the foregoing embodiments. Therefore, the positive electrode plate according to this application is of high electronic conductivity and ionic conductivity.

In some embodiments of this application, a compaction density of the positive electrode plate is CD g/cm$^3$, satisfying: $CD \geq 2.7$. In some embodiments of this application, $2.8 \leq CD \leq 3.1$. By controlling the compaction density of the positive electrode plate to fall within the above range, a sodium-ion secondary battery of a high energy density can be obtained favorably.

In this application, the positive electrode plate includes a positive current collector and a positive electrode material layer disposed on at least one surface of the positive current collector. The "positive electrode material layer disposed on at least one surface of the positive current collector" means that the positive electrode material layer may be disposed on one surface of the positive current collector or on both surfaces of the positive current collector along the thickness direction of the current collector. It is hereby noted that the "surface" here may be the entire region of the positive current collector, or a partial region of the positive current collector, without being particularly limited herein, as long as the objectives of the application can be achieved.

The positive current collector is not particularly limited herein, as long as the objectives of this application can be achieved. For example, the positive current collector may include aluminum foil, aluminum alloy foil, a composite current collector (for example, an aluminum-carbon composite current collector), or the like.

The positive electrode material layer further includes a conductive agent and a binder. The types of the conductive agent and binder are not particularly limited herein, as long as the objectives of this application can be achieved. For example, the binder may include, but is not limited to, one or more of polyacrylate ester, polyimide, polyamide, polyamideimide, polyvinylidene fluoride, poly(styrene-co-butadiene) (styrene-butadiene rubber), sodium alginate, polyvinyl alcohol, polytetrafluoroethylene, polyacrylonitrile, sodium carboxymethylcellulose, potassium carboxymethylcellulose, sodium hydroxymethyl cellulose, or potassium hydroxymethyl cellulose. The conductive agent may include, but is not limited to, at least one of conductive carbon black (Super P), carbon nanotubes (CNTs), carbon fibers, flake graphite, Ketjen black, graphene, a metal material, or a conductive polymer. The carbon nanotubes may include, but are not limited to, single-walled carbon nanotubes and/or multi-walled carbon nanotubes. The carbon fibers may include, but are not limited to, vapor grown carbon fibers (VGCF) and/or carbon nanofibers. The metal material may include, but is not limited to, metal powder and/or metal fibers. Specifically, the metal may include, but is not limited to, at least one of copper, nickel, aluminum, or silver. The conductive polymer may include, but is not limited to, at least one of polyphenylene derivatives, polyaniline, polythiophene, polyacetylene, or polypyrrole. The mass percentages of the positive electrode material, conductive agent, or binder in the positive electrode material layer are not particularly limited herein, and may be selected by a person skilled in the art as actually required, as long as the objectives of this application can be achieved.

The thicknesses of the positive current collector and positive electrode material layer are not particularly limited herein, as long as the objectives of this application can be achieved. For example, the thickness of the positive current collector is 6 $\mu$m to 12 $\mu$m, and the thickness of the positive electrode material layer is 30 $\mu$m to 120 $\mu$m. The thickness of the positive electrode plate is not particularly limited herein, as long as the objectives of this application can be achieved. For example, the thickness of the positive electrode plate is 36 $\mu$m to 250 $\mu$m.

Optionally, the positive electrode plate may further include a conductive layer. The conductive layer is located between the positive current collector and the positive electrode material layer. The constituents of the conductive layer are not particularly limited herein, and the conductive layer may be a conductive layer commonly used in the art. The conductive layer includes a conductive agent and a binder. The conductive agent and binder in the conductive layer are not particularly limited herein. For example, the conductive agent and binder may be at least one of the conductive agents and binders enumerated above.

A third aspect of this application provides a sodium-ion secondary battery. The sodium-ion secondary battery includes the positive electrode plate according to any one of the foregoing embodiments. Therefore, the sodium-ion secondary battery according to this application achieves good electrochemical performance.

In this application, the sodium-ion secondary battery further includes a negative electrode plate. The negative electrode plate may include a negative current collector and a negative electrode material layer disposed on at least one surface of the negative current collector. The negative current collector is not particularly limited herein, as long as the objectives of this application can be achieved. For example, the current collector may include a copper foil, a copper alloy foil, a nickel foil, a stainless steel foil, a titanium foil, foamed nickel, foamed copper, a composite current collector, or the like. The negative electrode material layer in this application includes a negative active material, a conductive agent, and a thickener. The negative active material of this application may include at least one of a metal oxide, a metal sulfide, a metal phosphide, a Sb-based negative electrode material, hard carbon, soft carbon, sodium metal, or the like. The metal oxide may include at least one of cobalt oxide, iron oxide, nickel oxide, or copper oxide. The metal sulfide may include at least one of tungsten disulfide, molybdenum disulfide, or tin disulfide. The metal phosphide may include at least one of lithium phosphide or sodium phosphide. The Sb-based negative electrode material may include at least one of a Sb-C composite material, a NiSb alloy, $Sb_2O_3$, or $Sb_2O_4$. The thicknesses of the negative current collector and the negative electrode material layer are not particularly limited herein, as long as the objectives of this application can be achieved. For example, the thickness of the negative current collector is 6 $\mu$m to 10 $\mu$m, and the thickness of the negative electrode material layer is 30 $\mu$m to 120 $\mu$m. The thickness of the negative electrode plate is not particularly limited herein, as long as the objectives of this application can be achieved. For example, the thickness of the negative electrode plate is 36 $\mu$m to 250 $\mu$m.

In this application, the sodium-ion secondary battery further includes a separator. The separator is configured to separate the positive electrode plate from the negative electrode plate, prevent a short circuit inside the sodium-ion secondary battery, and allow electrolyte ions to pass freely without affecting the electrochemical charge and discharge processes. The separator is not particularly limited herein, as long as the objectives of this application can be achieved. For example, the separator may be made of a material including but not limited to at least one of: a polyethylene (PE)- or polypropylene (PP)-based polyolefin (PO), a polyester (such as polyethylene terephthalate (PET) film), cellulose, polyimide (PI), polyamide film (PA), spandex, or aramid. The type of the separator may include at least one of a woven film, a non-woven film, a microporous film, a composite film, a laminated film, or a spinning film.

For example, the separator may include a substrate layer and a surface treatment layer. The substrate layer may be a nonwoven fabric, film, or composite film, which, in each case, assumes a porous structure. The material of the substrate layer may include at least one of polyethylene, polypropylene, polyethylene terephthalate, or polyimide. Optionally, the substrate layer may be a polypropylene porous film, a polyethylene porous film, a polypropylene non-woven fabric, a polyethylene non-woven fabric, or a polypropylene-polyethylene-polypropylene porous composite film. Optionally, the surface treatment layer is disposed on at least one surface of the substrate layer. The surface treatment layer may be a polymer layer or an inorganic compound layer, or a layer compounded of a polymer and an inorganic compound. For example, the inorganic compound layer includes inorganic particles and a binder. The inorganic particles are not particularly limited, and may include at least one of: aluminum oxide, silicon oxide, magnesium oxide, titanium oxide, hafnium dioxide, tin oxide, ceria, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder is not particularly limited herein. For example, the binder may be at least one of the binders enumerated above. The polymer layer includes a polymer. The material of the polymer includes at least one of polyamide, polyacrylonitrile, an acrylate polymer, polyacrylic acid, polyacrylic acid sodium salt, polyvinylpyrrolidone, polyvinyl ether, polyvinylidene fluoride, or poly(vinylidene fluoride-co-hexafluoropropylene).

In this application, the sodium-ion secondary battery further includes an electrolyte solution. The electrolyte solution includes a sodium salt and a nonaqueous solvent. The sodium salt may include at least one of $NaPF_6$, NaOTF, NaFSI, NaTFSI, $NaBF_4$, NaBOB, NaDFOB, or $NaClO_4$. The concentration of the sodium salt in the electrolyte solution is not particularly limited herein, as long as the objectives of this application can be achieved. For example, the concentration of the sodium salt in the electrolyte solution is 0.9 mol/L to 1.5 mol/L. As an example, the concentration of the sodium salt in the electrolyte solution may be 0.9 mol/L, 1.0 mol/L, 1.1 mol/L, 1.3 mol/L, 1.5 mol/L, or a value falling within a range formed by any two thereof. The nonaqueous solvent is not particularly limited herein, as long as the objectives of this application can be achieved. For example, the nonaqueous solvent may include, but is not limited to, at least one of a carbonate ester compound, a carboxylate ester compound, an ether compound, or other organic solvents. The carbonate ester compound may include, but is not limited to, at least one of a chain carbonate ester compound, a cyclic carbonate ester compound, or a fluorocarbonate ester compound. The chain carbonate compound may include, but is not limited to, at least one of dimethyl carbonate (DMC), diethyl carbonate (DEC), dipropyl carbonate (DPC), methyl propyl carbonate (MPC), ethylene propyl carbonate (EPC), or ethyl methyl carbonate (EMC). The cyclic carbonate compound may include, but is not limited to, at least one of ethylene carbonate (EC), propylene carbonate (PC), butylene carbonate (BC), or vinyl ethylene carbonate (VEC). The fluorocarbonate ester compound may include, but is not limited to, at least one of fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methyl ethylene, 1-fluoro-1-methyl ethylene carbonate, 1,2-difluoro-1-methyl ethylene carbonate, 1,1,2-trifluoro-2-methyl ethylene carbonate, or trifluoromethyl ethylene carbonate. The carboxylate ester compound may include, but is not limited to, at least one of methyl formate, methyl acetate, ethyl acetate, n-propyl acetate, tert-butyl acetate, methyl propionate, ethyl propionate, propyl propionate, γ-butyrolactone, decanolactone, valerolactone, or caprolactone. The ether compound may include, but is not limited to, at least one of dibutyl ether, tetraglyme, diglyme, 1,2-dimethoxyethane, 1,2-diethoxyethane, 1-ethoxy-1-methoxyethane, 2-methyltetrahydrofuran, or tetrahydrofuran. The above-mentioned other organic solvents may include, but are not limited to, at least one of dimethyl sulfoxide, 1,2-dioxolane, sulfolane, methyl sulfolane, 1,3-dimethyl-2-imidazolidinone, N-methyl-2-pyrrolidone, dimethylformamide, acetonitrile, trimethyl phosphate, triethyl phosphate, or trioctyl phosphate.

The sodium-ion secondary battery of this application further includes a packaging bag. The packaging bag is configured to accommodate a positive electrode plate, a separator, a negative electrode plate, an electrolyte solution, and other components known in the art for use in a secondary battery. Such other components are not limited herein. The packaging bag is not particularly limited herein, and may be a packaging bag well-known in the art, as long as the objectives of this application can be achieved.

The process of preparing the sodium-ion secondary battery in this application is well known to a person skilled in the art, and is not particularly limited herein. For example, the preparation process may include, but is not limited to, the following steps: stacking the positive electrode plate, the separator, and the negative electrode plate in sequence, and performing operations such as winding and folding as required to obtain a jelly-roll electrode assembly; putting the electrode assembly into a package, injecting the electrolyte solution into the package, and sealing the package to obtain a sodium-ion secondary battery; or, stacking the positive electrode plate, the separator, and the negative electrode plate in sequence, and then fixing the four corners of the entire stacked structure by use of adhesive tape to obtain a stacked-type electrode assembly, putting the electrode assembly into a package, injecting the electrolyte solution into the package, and sealing the package to obtain a sodium-ion secondary battery. In addition, an overcurrent prevention element, a guide plate, and the like may be placed into the packaging bag as required, so as to prevent the rise of internal pressure, overcharge, and overdischarge of the sodium-ion secondary battery.

A fourth aspect of this application provides an electrical device. The electrical device includes the sodium-ion secondary battery according to any one of the foregoing embodiments. Therefore, the electrical device according to this application achieves good operating performance.

The electrical device of this application is not particularly limited herein, and may be any electrical device known in the prior art. In some embodiments, the electrical device may include, but is not limited to, a laptop computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household storage battery, sodium-ion capacitor, or the like.

## Embodiments

The implementations of this application are described below in more detail with reference to some embodiments and comparative embodiments. Various tests and evaluations are performed by the following methods. In addition, unless otherwise specified, the word "parts" means parts by mass, and the symbol "%" means a percentage by mass.

## Test methods and devices

## Measuring the specific surface area

Measuring the specific surface area of the original-state positive electrode material in each embodiment and each comparative embodiment by a nitrogen adsorption or desorption method by using a specific surface area analyzer (model: Tristar II 3020M) with reference to the national standard *Determination of Specific Surface Area of Solids By Gas Adsorption Using BET Method* (GB/T 19587-2017).

## Measuring the pH value

Weighing out 1 gram of positive electrode material sample, and placing the sample into a 100 mL conical flask. Adding 20 mL of ethylene glycol (with a purity of 99.999%), adding a magnetic stir bar, and then sealing the flask opening with a sealing film. Stirring the mixture magnetically for 30 minutes, and then performing suction-filtering. Diluting the filtrate to 100 mL with pure water. Placing 50 mL of the filtrate into a beaker, and testing the filtrate by a potentiometric titration method to obtain the content of residual sodium in the positive electrode material.

The reaction formulae are as follows:

$$Na_2CO_3 + HCl = NaCl + NaHCO_3$$

$$NaOH + HCl = NaCl + H_2O$$

$$NaHCO_3 + HCl = NaCl + H_2CO_3$$

## Determining the coating rate

Cutting the original-state positive electrode plate in each embodiment and each comparative embodiment by using an ion beam cross-section polisher (model: JEOL-IB-09010CP), so as to obtain a cross-section. Observing the cross-section by using a scanning electron microscope (SEM, model: Zeiss Sigma 02-33) at an appropriate magnification (for example, $1000\times$ to $30000\times$), identifying the perimeter $L_1$ of the matrix material by using the Image J software, and also identifying the total perimeter $L_2$ of the uncoated region, and calculating the coating rate as: $M = 1 - L_2/L_1$.

## Measuring the particle diameter of the polyanionic material

Performing a particle size distribution test on the polyanionic material by using a Malvern particle size analyzer with reference to the national standard *Particle Size Analysis-Laser Diffraction Methods* (GB/T 19077-2016).

## Testing the water absorption amount and degradation degree of the material

Performing a thermogravimetric analysis with a thermogravimetric analyzer in accordance with the *General Rules of Thermal Analysis Methods* (JY_T0589.1-2020/JY_T0589.4-2020/JY_T0589.5-2020) to evaluate the change in mass of the positive electrode material with temperature.

Taking 10 mg of positive electrode material in each different state in each embodiment and comparative embodiment as a specimen, and placing the specimen in a thermogravimetric analyzer, where the test atmosphere is nitrogen, the test temperatures ranges from 35 °C to 400 °C, and heating rate is 5 °C/min, so that a TG curve is obtained.

On the obtained TG curve, the weight loss in the temperature range of 35 °C to 120 °C is primarily due to the evaporation of free water on the material surface, and the weight loss in the temperature range of 120 °C to 400 °C is attributed to byproducts generated from material degradation after water absorption. The weight loss percentage in the temperature range of 35 °C to 120 °C is defined as the water absorption amount, and the weight loss percentage in the temperature range of 120 °C to 400 °C is defined as the degradation degree.

$$\text{Water absorption amount} = 100\% - \text{mass percent at } 120\,°C \text{ on the TG curve}$$

Degradation degree = mass percent at 120 °C on the TG curve - mass percent at 400 °C on the TG curve.

The water absorption amount of the positive electrode material in the original state is denoted as W1, and the water absorption amount of the positive electrode material in the A2 state is denoted as W2. The degradation degree of the positive electrode material in the original state is denoted as T1, and the degradation degree of the positive electrode material in the A2 state is denoted as T2.

**Testing the specific capacity**

Mixing the positive electrode materials in different states in each embodiment and each comparative embodiment, the binder polyvinylidene difluoride, and the conductive agent acetylene black at a mass ratio of 80: 10: 10 in a dry room with a temperature of 25 °C and a relative humidity less than or equal to 2%. Adding an appropriate amount of N-methylpyrrolidone (NMP) solvent, and stirring well to form a homogeneous positive electrode slurry. Applying the positive electrode slurry onto a 10 $\mu$m-thick aluminum foil (positive current collector), performing oven-drying and cold-pressing, and then die-cutting the foil into 14 mm-diameter discs that serve as positive electrode plates. Assembling a coin half-cell by using a sodium sheet as a negative electrode plate, using a 12 $\mu$m-thick polypropylene film as a separator, using a mixed solution of 1 mol/L $NaPF_6$ together with ethylene carbonate (EC) and propylene carbonate (PC) (the volume ratio between the EC and the PC is 1 : 1) as an electrolyte solution.

Performing a charge-discharge test on the half-cell in a Land battery test system (LAND CT2001A). Performing charge-discharge operations for a first cycle at an operating voltage of 2.0 V to 4.0 V and a current density of 10 mA/g, and recording the first-cycle specific discharge capacity.

Measuring the specific discharge capacity of the original-state positive electrode material, denoted as C1; and measuring the specific discharge capacity of the positive electrode material in the A2 state, denoted as C2.

**Embodiment 1**

**<Preparing a positive electrode material>**

Weighing out the precursor $Ni_{0.316}Fe_{0.332}Mn_{0.35}(OH)_2$ (with a $D_{v50}$ of 6 $\mu$m), $Na_2CO_3$, and nano-$Al_2O_3$ at a stoichiometric ratio of $NaNi_{0.316}Fe_{0.332}Mn_{0.35}Al_{0.002}O_2$ (NFMA). Grinding the materials evenly, calcining the materials at 900 °C for 12 hours, and pulverizing the calcined product to obtain a matrix material NFMA with a $D_{v50}$ of 6 $\mu$m. A scanning electron microscope image of the matrix material is shown in FIG. 1. Weighing out a corresponding amount of the feedstocks $Na_2CO_3$, $NH_4VO_3$, and $NH_4H_2PO_4$ at the stoichiometric ratio of $Na_3V_2(PO_4)_3$ (NVP). Putting the weighed feedstocks into a ball-milling jar. Milling the feedstocks by a wet ball-milling method in a planetary ball mill (the ball-milling medium is acetone), during which the ball-milling speed is 300 r/min, and the ball-milling duration is 3 hours. Subsequently, adding NFMA at a mass ratio of 95 : 5 between NFMA and NVP, and then ball-milling the mixture for another duration of 3 hours. Putting the ball-milled product into a vacuum oven, and drying the product at 60 °C. Next, sintering the dried product in a vacuum tube furnace filled with nitrogen. Increasing the temperature to 350 °C and sintering for 4 hours, and then increasing the temperature to 800 °C and sintering for 8 hours, and then grinding the sintered product for 4 hours to obtain a positive electrode material in which the surface of the NFMA particles is coated with NVP. The material at this time is in an original state.

Spreading 10 grams of the original-state material flat in a 100 $cm^2$ petri dish, and then placing the petri dish together with the material in a humidity chamber at 25 °C and RH 50% for 10 days, and then taking out the petri dish. After being treated in the humidity chamber, the material is in an A2 state.

**<Preparing a positive electrode plate>**

Mixing the original-state positive electrode material, a binder polyvinylidene difluoride, and a conductive agent acetylene black at a mass ratio of 80: 10: 10 in a dry room at a temperature of 25 °C and a relative humidity less than or equal to 2%. Adding an N-methylpyrrolidone (NMP) solvent, and stirring well to form a positive electrode slurry with a solid content of 72%. Applying the positive electrode slurry onto a 10 $\mu$m-thick aluminum foil by using a scraper until the coating layer of the slurry is 200 $\mu$m thick (the thickness here means the thickness of the coating applied to the aluminum foil on a single side), and then drying the foil at 70 °C for 12 hours, and then cold-pressing the foil. Subsequently, die-cutting the foil into 14 mm-diameter discs that serve as original-state positive electrode plates.

Mixing the A2-state positive electrode material, a binder polyvinylidene difluoride, and a conductive agent acetylene black at a mass ratio of 80: 10: 10 in a dry room at a temperature of 25 °C and a relative humidity less than or equal to 2%. Adding an N-methylpyrrolidone (NMP) solvent, and stirring well to form a positive electrode slurry with a solid content of 72%. Applying the positive electrode slurry onto a 10 $\mu$m-thick aluminum foil by using a scraper until the coating layer of the slurry is 200 $\mu$m thick (the thickness here means the thickness of the coating applied to the aluminum foil on a single side), and then drying the foil at 70 °C for 12 hours, and then cold-pressing the foil. Subsequently, die-cutting the foil into 14 mm-diameter discs that serve as A2-state positive electrode plates.

**<Preparing a negative electrode plate>**

Die-cutting a sodium sheet into 14 mm-diameter discs that serve as negative electrode plates.

**<Preparing an electrolyte solution>**

Mixing ethylene carbonate and propylene carbonate at a volume ratio of 1: 1 in a dry room with a temperature of 25 °C and a relative humidity less than or equal to 2% to form a nonaqueous solvent, and then adding a sodium salt $NaPF_6$ into the nonaqueous solvent, and dissolving and stirring the sodium salt well to produce an electrolyte solution. The molar concentration of $NaPF_6$ is 1 mol/L.

**<Preparing a separator>**

Using a 12 $\mu$m-thick porous polyethylene film (supplied by Celgard) as a separator.

**<Preparing a sodium-ion battery>**

Stacking the negative electrode plate, the separator, the original-state positive electrode plate sequentially to assemble a coin half-cell in a glovebox, denoted as an original-state coin half-cell.

Stacking the negative electrode plate, the separator, the positive electrode plate in the A2 state sequentially to assemble a coin half-cell in the glovebox, denoted as an A2-state coin half-cell.

**Embodiment 2**

Identical to Embodiment 1 except that <Preparing a positive electrode material> is different from that in Embodiment 1.

**<Preparing a positive electrode material>**

Weighing out the precursor $Ni_{0.316}Fe_{0.332}Mn_{0.35}(OH)_2$ (with a $D_{v50}$ of 6 $\mu$m), $Na_2CO_3$, and nano-$Al_2O_3$ at a stoichiometric ratio of $NaNi_{0.316}Fe_{0.332}Mn_{0.35}Al_{0.002}O_2$ (NFMA). Grinding the materials evenly, calcining the materials at 900 °C for 12 hours, and pulverizing the calcined product to obtain a matrix material NFMA with a $D_{v50}$ of 6 $\mu$m. Weighing out a corresponding amount of the feedstock $FePO_4$ and anhydrous $Na_3PO_4$ at a stoichiometric ratio of $Na_4Fe_3(PO_4)_2P_2O_7$ ($N_4FPP$). Putting the weighed feedstock into a ball-milling jar. Milling the feedstocks by a wet ball-milling method in a planetary ball mill (the ball-milling medium is acetone), during which the ball-milling speed is 300 r/min, and the ball-milling duration is 3 hours. Subsequently, adding NFMA at a mass ratio of 95 : 5 between NFMA and $N_4FPP$, and then ball-milling the mixture for another duration of 3 hours. Putting the ball-milled product into a vacuum oven, and drying the product at 60 °C. Next, sintering the dried product in a vacuum tube furnace filled with nitrogen at a temperature of 500 °C for a duration of 10 hours, and then grinding the sintered product for 4 hours to obtain a positive electrode material in which the surface of the NFMA particles is coated with $N_4FPP$. The material at this time is in an original state.

Spreading 10 grams of the original-state material flat in a 100 $cm^2$ petri dish, and then placing the petri dish together with the material in a humidity chamber at 25 °C and RH 50% for 10 days, and then taking out the petri dish. After being treated in the humidity chamber, the material is in an A2 state.

**Embodiment 3**

Identical to Embodiment 1 except that <Preparing a positive electrode material> is different from that in Embodiment 1.

**<Preparing a positive electrode material>**

Weighing out the precursor $Ni_{0.316}Fe_{0.332}Mn_{0.35}(OH)_2$ (with a $D_{v50}$ of 6 $\mu$m), $Na_2CO_3$, and nano-$Al_2O_3$ at a stoichiometric ratio of $NaNi_{0.316}Fe_{0.332}Mn_{0.35}Al_{0.002}O_2$ (NFMA). Grinding the materials evenly, calcining the materials at 900 °C for 12 hours, and pulverizing the calcined product to obtain a matrix material NFMA with a $D_{v50}$ of 6 $\mu$m. Weighing out a corresponding amount of the feedstock $FePO_4$ and anhydrous $Na_3PO_4$ at a stoichiometric ratio of $Na_3Fe_2(PO_4)P_2O_7$ ($N_3FPP$). Putting the weighed feedstock into a ball-milling jar. Milling the feedstocks by a wet ball-milling method in a planetary ball mill (the ball-milling medium is acetone), during which the ball-milling speed is 300 r/min, and the ball-milling duration is 3 hours. Subsequently, adding NFMA at a mass ratio of 95 : 5 between NFMA and $N_3FPP$, and then ball-milling the mixture for another duration of 3 hours. Putting the ball-milled product into a vacuum oven, and drying the product at 60 °C. Next, sintering the dried product in a vacuum tube furnace filled with nitrogen at a temperature of 500 °C for a duration of 24 hours, and then grinding the sintered product for 4 hours to obtain a positive electrode material in which the surface of the NFMA particles is coated with $N_3FPP$. The material at this time is in an original state.

Spreading 10 grams of the original-state material flat in a 100 $cm^2$ petri dish, and then placing the petri dish together with the material in a humidity chamber at 25 °C and RH 50% for 10 days, and then taking out the petri dish. After being treated in the humidity chamber, the material is in an A2 state.

**Embodiment 4**

Identical to Embodiment 2 except that in <Preparing a positive electrode material>, the mass ratio of the added NFMA to $N_4FPP$ is adjusted to 97 : 3.

**Embodiment 5**

Identical to Embodiment 2 except that in <Preparing a positive electrode material>, the mass ratio of the added NFMA to $N_4FPP$ is adjusted to 90 : 10.

**Embodiment 6**

Identical to Embodiment 2 except that in <Preparing a positive electrode material>, the grinding time of the mixture in which the NFMA and $N_4FPP$ are added is adjusted to 6 hours.

**Embodiment** 7

Identical to Embodiment 2 except that in <Preparing a positive electrode material>, the grinding time of the mixture in which the NFMA and $N_4FPP$ are added is adjusted to 2 hours.

**Embodiment 8**

Identical to Embodiment 2 except that in <Preparing a positive electrode material>, the grinding time of the mixture in which the NFMA and $N_4FPP$ are added is adjusted to 1 hour.

**Embodiment 9**

Identical to Embodiment 2 except that in <Preparing a positive electrode material>, the mass ratio of the added NFMA to $N_4FPP$ is adjusted to 99 : 1 and the grinding time of the mixture in which the NFMA and $N_4FPP$ are added is adjusted to 1 hour.

**Embodiment** 10

Identical to Embodiment 2 except that in <Preparing a positive electrode material>, the grinding time of the mixture in which the NFMA and $N_4FPP$ are added is adjusted to 0.5 hour.

**Embodiment 11**

Identical to Embodiment 2 except that in <Preparing a positive electrode material>, the grinding time of the mixture in which the NFMA and $N_4FPP$ are added is adjusted to 2.5 hours.

**Embodiment 12**

Identical to Embodiment 2 except that in <Preparing a positive electrode material>, the grinding time of the mixture in which the NFMA and $N_4FPP$ are added is adjusted to 5 hours.

**Embodiment 13**

Identical to Embodiment 2 except that in <Preparing a positive electrode material>, the sintering temperature is adjusted to 400 °C and the sintering time is adjusted to 8 hours.

**Embodiment 14**

Identical to Embodiment 2 except that in <Preparing a positive electrode material>, the sintering temperature is adjusted to 580 °C and the sintering time is adjusted to 12 hours.

**Embodiment 15**

Identical to Embodiment 2 except that in <Preparing a positive electrode material>, the sintering temperature is adjusted to 650 °C and the sintering time is adjusted to 16 hours.

**Embodiment 16**

Identical to Embodiment 2 except that in <Preparing a positive electrode material>, the $D_{v50}$ of the precursor of the matrix material NFMA is adjusted to 10 $\mu$m and the grinding time of the mixture in which the NFMA and $N_4$FPP are added is adjusted to 6 hours.

**Embodiment 17**

Identical to Embodiment 5 except that in <Preparing a positive electrode material>, the $D_{v50}$ of the precursor of the matrix material NFMA is adjusted to 3 $\mu$m and the grinding time of the mixture in which the NFMA and $N_4$FPP are added is adjusted to 0.5 hour.

**Comparative Embodiment 1**

Identical to Embodiment 1 except that <Preparing a positive electrode material> is different from that in Embodiment 1.

**<Preparing a positive electrode material>**

Weighing out the precursor $Ni_{0.316}Fe_{0.332}Mn_{0.35}(OH)_2$ (with a $D_{v50}$ of 6 $\mu$m), $Na_2CO_3$, and nano-$Al_2O_3$ at a stoichiometric ratio of $NaNi_{0.316}Fe_{0.332}Mn_{0.35}Al_{0.002}O_2$ (NFMA). Grinding the materials evenly, calcining the materials at 900 °C for 12 hours, and pulverizing the calcined product to obtain a matrix material NFMA with a $D_{v50}$ of 6 $\mu$m. The material at this time is in an original state.
Spreading 10 grams of the original-state material flat in a 100 $cm^2$ petri dish, and then placing the petri dish together with the material in a humidity chamber at 25 °C and RH 50% for 10 days, and then taking out the petri dish. After being treated in the humidity chamber, the material is in an A2 state.

**Comparative Embodiment 2**

Identical to Embodiment 2 except that in <Preparing a positive electrode material>, the mass ratio of the added NFMA to $N_4$FPP is adjusted to 99.9 : 0.1.

**Comparative Embodiment 3**

Identical to Embodiment 2 except that in <Preparing a positive electrode material>, the mass ratio of the added NFMA to $N_4$FPP is adjusted to 80 : 20.
Table 1 shows the preparation parameters and electrical performance parameters in each embodiment and each comparative embodiment.

**Table 1 (To be continued)**

| | Matrix material·polyanionic material | Mass percent of matrix material | Mass percent of polyanionic material | BET ($m^2$/g) | pH | Coating rate | D (nm) | CD (g/$cm^3$) |
|---|---|---|---|---|---|---|---|---|
| Embodiment 1 | $NaNi_{0.316}Fe_{0.332}Mn_{0.35}Al_{0.002}O_2 \cdot Na_3V_2(PO_4)_3$ | 95% | 5% | 0.65 | 6.2 | 93.50% | 30 | 3.03 |
| Embodiment 2 | $NaNi_{0.316}Fe_{0.332}Mn_{0.35}Al_{0.002}O_2 \cdot Na_4Fe_3(PO_4)_2P_2O_7$ | 95% | 5% | 0.73 | 10.2 | 94.30% | 30 | 3.01 |
| Embodiment 3 | $NaNi_{0.316}Fe_{0.332}Mn_{0.35}Al_{0.002}O_2 \cdot Na_3Fe_2(PO_4)P_2O_7$ | 95% | 5% | 0.81 | 10.3 | 93.80% | 30 | 3.01 |
| Embodiment 4 | $NaNi_{0.316}Fe_{0.332}Mn_{0.35}Al_{0.002}O_2 \cdot Na_4Fe_3(PO_4)_2P_2O_7$ | 97% | 3% | 1.2 | 12.5 | 57.60% | 30 | 3.06 |
| Embodiment 5 | $NaNi_{0.316}Fe_{0.332}Mn_{0.35}Al_{0.002}O_2 \cdot Na_4Fe_3(PO_4)_2P_2O_7$ | 90% | 10% | 0.83 | 10.2 | 97.10% | 30 | 2.89 |
| Embodiment 6 | $NaNi_{0.316}Fe_{0.332}Mn_{0.35}Al_{0.002}O_2 \cdot Na_4Fe_3(PO_4)_2P_2O_7$ | 95% | 5% | 0.65 | 10.3 | 94.80% | 30 | 3.01 |
| Embodiment 7 | $NaNi_{0.316}Fe_{0.332}Mn_{0.35}Al_{0.002}O_2 \cdot Na_4Fe_3(PO_4)_2P_2O_7$ | 95% | 5% | 1.53 | 10.5 | 76.10% | 30 | 3.01 |
| Embodiment 8 | $NaNi_{0.316}Fe_{0.332}Mn_{0.35}Al_{0.002}O_2 \cdot Na_4Fe_3(PO_4)_2P_2O_7$ | 95% | 5% | 4.14 | 10.4 | 55.90% | 30 | 3.02 |
| Embodiment 9 | $NaNi_{0.316}Fe_{0.332}Mn_{0.35}Al_{0.002}O_2 \cdot Na_4Fe_3(PO_4)_2P_2O_7$ | 99% | 1% | 0.82 | 13 | 36.40% | 30 | 3.09 |
| Embodiment 10 | $NaNi_{0.316}Fe_{0.332}Mn_{0.35}Al_{0.002}O_2 \cdot Na_4Fe_3(PO_4)_2P_2O_7$ | 95% | 5% | 10.38 | 11.9 | 16.70% | 30 | 3.03 |
| Embodiment 11 | $NaNi_{0.316}Fe_{0.332}Mn_{0.35}Al_{0.002}O_2 \cdot Na_4Fe_3(PO_4)_2P_2O_7$ | 95% | 5% | 1.39 | 11.2 | 81.30% | 30 | 3.01 |
| Embodiment 12 | $NaNi_{0.316}Fe_{0.332}Mn_{0.35}Al_{0.002}O_2 \cdot Na_4Fe_3(PO_4)_2P_2O_7$ | 95% | 5% | 0.68 | 10.3 | 94.60% | 30 | 3.01 |
| Embodiment 13 | $NaNi_{0.316}Fe_{0.332}Mn_{0.35}Al_{0.002}O_2 \cdot Na_4Fe_3(PO_4)_2P_2O_7$ | 95% | 5% | 0.89 | 10.3 | 94.50% | 20 | 3.01 |
| Embodiment 14 | $NaNi_{0.316}Fe_{0.332}Mn_{0.35}Al_{0.002}O_2 \cdot Na_4Fe_3(PO_4)_2P_2O_7$ | 95% | 5% | 0.87 | 10.2 | 93.70% | 100 | 3.02 |
| Embodiment 15 | $NaNi_{0.316}Fe_{0.332}Mn_{0.35}Al_{0.002}O_2 \cdot Na_4Fe_3(PO_4)_2P_2O_7$ | 95% | 5% | 0.81 | 10.5 | 93.10% | 200 | 3.01 |

(continued)

| Matrix material·polyanionic material | Mass percent of matrix material | Mass percent of polyanionic material | BET (m²/g) | pH | Coating rate | D (nm) | CD (g/cm³) |
|---|---|---|---|---|---|---|---|
| Embodiment 16 | $NaNi_{0.316}Fe_{0.332}Mn_{0.35}Al_{0.002}O_2 \cdot Na_4Fe_3(PO_4)_2P_2O_7$ | 95% | 5% | 0.2 | 10 | 95.10% | 30 | 3.01 |
| Embodiment 17 | $NaNi_{0.316}Fe_{0.332}Mn_{0.35}Al_{0.002}O_2 \cdot Na_4Fe_3(PO_4)_2P_2O_7$ | 90% | 10% | 20 | 11.2 | 25.12% | 30 | 2.89 |
| Comparative Embodiment 1 | $NaNi_{0.316}Fe_{0.332}Mn_{0.35}Al_{0.002}O_2$ | 100% | 0% | 0.65 | 13.5 | 0.00% | / | 3.12 |
| Comparative Embodiment 2 | $NaNi_{0.316}Fe_{0.332}Mn_{0.35}Al_{0.002}O_2 \cdot Na_4Fe_3(PO_4)_2P_2O_7$ | 99.90% | 0.10% | 0.75 | 13.5 | 24.50% | 30 | 3.08 |
| Comparative Embodiment 3 | $NaNi_{0.316}Fe_{0.332}Mn_{0.35}Al_{0.002}O_2 \cdot Na_4Fe_3(PO_4)_2P_2O_7$ | 80% | 20% | 0.72 | 9.4 | 98.90% | 30 | 2.71 |

**Table 1 (Continued)**

| | Original state | | | A2 state | | |
|---|---|---|---|---|---|---|
| | Water absorption amount W1 (%) | Degradation degree T1 (%) | Specific capacity C1 (mAh/g) | Water absorption amount W2 (%) | Degradation degree T2 (%) | Specific capacity C2 (mAh/g) |
| Embodiment 1 | 0.19 | 0.205 | 135 | 0.282 | 0.464 | 134 |
| Embodiment 2 | 0.094 | 0.67 | 134 | 0.674 | 1.055 | 133 |
| Embodiment 3 | 0.098 | 0.376 | 133 | 0.519 | 0.687 | 132 |
| Embodiment 4 | 0.079 | 0.568 | 134 | 2.892 | 2.257 | 76 |
| Embodiment 5 | 0.084 | 0.587 | 133 | 0.629 | 0.914 | 133 |
| Embodiment 6 | 0.081 | 0.592 | 134 | 0.603 | 0.935 | 132 |
| Embodiment 7 | 0.087 | 0.601 | 133 | 1.574 | 1.896 | 103 |
| Embodiment 8 | 0.083 | 0.592 | 134 | 2.541 | 2.093 | 111 |
| Embodiment 9 | 0.078 | 0.582 | 134 | 3.154 | 6.673 | 63 |
| Embodiment 10 | 0.085 | 0.591 | 133 | 3.681 | 9.543 | 73 |
| Embodiment 11 | 0.087 | 0.578 | 134 | 1.238 | 1.235 | 114 |
| Embodiment 12 | 0.079 | 0.582 | 133 | 0.614 | 0.981 | 132 |
| Embodiment 13 | 0.087 | 0.612 | 135 | 0.607 | 0.974 | 134 |
| Embodiment 14 | 0.082 | 0.609 | 130 | 0.623 | 0.953 | 123 |
| Embodiment 15 | 0.081 | 0.611 | 125 | 0.617 | 0.965 | 115 |
| Embodiment 16 | 0.093 | 0.66 | 132 | 0.661 | 1.003 | 132 |
| Embodiment 17 | 0.084 | 0.586 | 133 | 3.179 | 8.772 | 89 |
| Comparative Embodiment 1 | 0.047 | 0.2 | 135 | 4.03 | 10.6 | 34 |
| Comparative Embodiment 2 | 0.086 | 0.652 | 135 | 3.542 | 8.365 | 51 |
| Comparative Embodiment 3 | 0.091 | 0.66 | 127 | 0.601 | 0.873 | 127 |
| Note: "/" in Table 1 indicates absence of the relevant preparation parameter. | | | | | | |

Referring to Table 1, as can be seen from Embodiments 1 to 17 and Comparative Embodiments 1 to 3, the types of the matrix material and the polyanionic material in the positive electrode material as well as the mass percent of the polyanionic material are controlled to fall within the ranges specified herein. Therefore, the positive electrode material exhibits a relatively small amount of water absorption and a relatively low degradation degree, and the prepared sodium-ion secondary battery exhibits a relatively high specific capacity, indicating that the positive electrode material of this application is of relatively high stability, and the sodium-ion secondary battery prepared from the positive electrode material of this application exhibits good electrochemical performance.

The specific surface area of the positive electrode material, the coating rate of the polyanionic material on the matrix material, the particle diameter of the primary particles of the polyanionic material, and the compaction density of the positive electrode plate usually affect the electrochemical performance of the sodium-ion secondary battery. As can be seen from Embodiments 1 to 17, the specific surface area of the positive electrode material, the pH value of the positive electrode material, the coating rate of the polyanionic material on the matrix material, the particle diameter of the primary particles of the polyanionic material, and the compaction density of the electrode plate are controlled to fall within the ranges specified herein, thereby further improving the stability of the positive electrode material and the electrochemical performance of the sodium-ion secondary battery.

The pH value of the positive electrode material usually also affects the electrochemical performance of the sodium-ion secondary battery. As can be seen from Embodiments 2 to 4, the pH value of the positive electrode material is controlled to fall within the range specified herein, thereby further improving the stability of the positive electrode material and the electrochemical performance of the sodium-ion secondary battery.

As can be seen from FIG. 2, in the positive electrode material prepared in Embodiment 1, the surface of the matrix material contains a polyanionic material, and the matrix material is wrapped by the polyanionic material relatively completely.

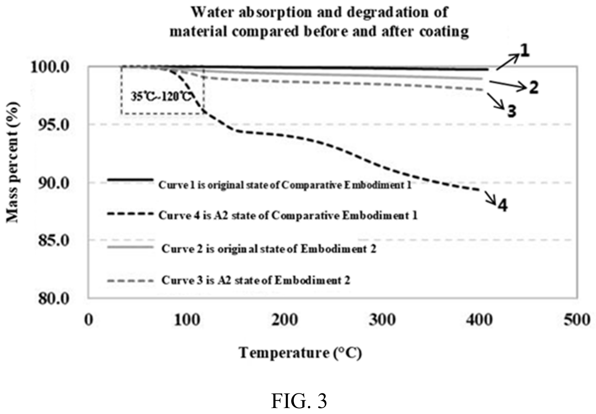

FIG. 3 is a comparison chart of a water absorption amount and a degradation degree of a matrix material with a surface containing no polyanionic material versus a matrix material with a surface containing a polyanionic material. In the drawing, the curve in the rectangular dashed box is a curve corresponding to the temperature range of 35 °C to 120 °C, and the curve outside the rectangular dashed box is a curve corresponding to the temperature range of 120 °C to 400 °C. As can be seen from FIG. 3, the water absorption amount and degradation degree in the A2 state in Embodiment 2 are much lower than the water absorption amount and degradation degree in the A2 state in Comparative Embodiment 1, indicating that the positive electrode material provided in this application is of higher stability.

Described above are merely preferred embodiments of this application that are not intended to limit this application. Any modifications, equivalent replacements, improvements, and the like made without departing from the concept and principles of this application still fall within the protection scope of this application.

**Claims**

1. A positive electrode material, wherein the positive electrode material comprises a matrix material $Na_xNi_aFe_bMn_cM_dO_2$, a surface of the matrix material comprises a polyanionic material, and the polyanionic material comprises at least one of a phosphate compound, a NASICON compound, a pyrophosphate compound, or a fluorinated phosphate compound;

   in the matrix material $Na_xNi_aFe_bMn_cM_dO_2$, wherein M comprises at least one of Co, Mg, Ca, B, Al, Zr, Ti, W, Mo, Cr, Sr, Y, Cd, Sn, Sb, Ce, Li, K, Zn, La, F, Si, or P, $0.7 \leq x < 1.0$, $0.2 < a \leq 0.5$, $0.2 < b \leq 0.5$, $0.2 < c \leq 0.7$, $0 \leq d \leq 0.2$, $0.7 \leq x/(a + b + c + d) < 1.0$; and
   based on a mass of the positive electrode material, a mass percent of the polyanionic material is 1% to 10%.

2. The positive electrode material according to claim 1, wherein a specific surface area of the positive electrode material is BET $m^2/g$, satisfying: $0.2 \leq BET \leq 20$.

3. The positive electrode material according to claim 1, wherein a pH value of the positive electrode material is 6 to 12.

4. The positive electrode material according to claim 1, wherein at least a part of the surface of the matrix material is coated with the polyanionic material, and a coating rate of the polyanionic material on the matrix material is greater than or equal to 80%.

5. The positive electrode material according to claim 1, wherein the matrix material is spherical or quasi-spherical secondary particles.

6. The positive electrode material according to claim 1, wherein the matrix material is monocrystalline or quasi-monocrystalline primary particles.

7. The positive electrode material according to claim 1, wherein a particle diameter D of primary particles of the polyanionic material is 20 nm to 200 nm.

8. The positive electrode material according to claim 1, wherein the positive electrode material satisfies at least one of the following characteristics:

   a)

$$0.65 \leq BET \leq 10;$$

   b) a coating rate of the polyanionic material on the matrix material is greater than or equal to 90%; or
   c) a particle diameter D of primary particles of the polyanionic material is 20 nm to 100 nm.

9. The positive electrode material according to claim 1, wherein the phosphate compound comprises $NaRPO_4$, wherein R is selected from Fe or Mn; the NASICON compound comprises $Na_yQ_2(XO_4)_3$, wherein $1 \leq y \leq 4$, Q comprises at least one of V, Fe, Ni, Mn, or Ti, and X comprises at least one of P, S, or Si; the pyrophosphate compound comprises $Na_mZ(PO_4)_n(P_2O_7)_q$, wherein $2 \leq m < 10$, $0 \leq n \leq 4$, $1 \leq q < 10$, and Z comprises at least one of Fe, Mn, or Co; and the fluorinated phosphate compound comprises at least one of $NaVPO_4F$ or $Na_3(VO_{1-w}PO_4)_2F_{1+2w}$, wherein $0 \leq w \leq 1$.

10. A positive electrode plate, comprising the positive electrode material according to any one of claims 1 to 9.

11. The positive electrode plate according to claim 10, wherein a compaction density of the positive electrode plate is CD g/cm$^3$, satisfying: $CD \geq 2.7$.

12. A sodium-ion secondary battery, comprising the positive electrode plate according to claim 11.

13. An electrical device, comprising the sodium-ion secondary battery according to claim 12.

FIG. 1

FIG. 2

Water absorption and degradation of material compared before and after coating

Curve 1 is original state of Comparative Embodiment 1

Curve 4 is A2 state of Comparative Embodiment 1

Curve 2 is original state of Embodiment 2

Curve 3 is A2 state of Embodiment 2

FIG. 3

## INTERNATIONAL SEARCH REPORT

| | International application No. |
|---|---|
| | **PCT/CN2023/089489** |

| A. | CLASSIFICATION OF SUBJECT MATTER |
|---|---|
| | H01M4/36(2006.01)i;  H01M4/505(2010.01)i |

According to International Patent Classification (IPC) or to both national classification and IPC

| B. | FIELDS SEARCHED |
|---|---|

Minimum documentation searched (classification system followed by classification symbols)

　　IPC:H01M

Documentation searched other than minimum documentation to the extent that such documents are included in the fields searched

Electronic data base consulted during the international search (name of data base and, where practicable, search terms used)

　　CNTXT, WPABSC, ENTXTC, VEN, CNKI: 正极, 阴极, 包覆, 包裹, 覆盖, 壳, 表面, 表层, 钠, cathode, positive, cover, coat, shell, surface, Na

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 115763768 A (JIANGSU TENPOWER LITHIUM CO., LTD.) 07 March 2023 (2023-03-07) description, paragraphs 4-124 | 1-13 |
| X | CN 114824269 A (BEIJING EASPRING MATERIAL TECHNOLOGY CO., LTD.) 29 July 2022 (2022-07-29) description, paragraphs 6-227 | 1-13 |
| A | CN 106684369 A (CHANGSHA UNIVERSITY OF SCIENCE AND TECHNOLOGY) 17 May 2017 (2017-05-17) entire document | 1-13 |
| A | CN 111082058 A (SOUTH CHINA UNIVERSITY OF TECHNOLOGY) 28 April 2020 (2020-04-28) entire document | 1-13 |
| A | KR 20200034298 A (INDUSTRY ACADEMY COOPERATION FOUNDATION OF SEJONG UNIVERSITY) 31 March 2020 (2020-03-31) entire document | 1-13 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **08 December 2023** | **26 December 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/089489**

| Patent document cited in search report | | | Publication date (day/month/year) | Patent family member(s) | | | Publication date (day/month/year) |
|---|---|---|---|---|---|---|---|
| CN | 115763768 | A | 07 March 2023 | None | | | |
| CN | 114824269 | A | 29 July 2022 | None | | | |
| CN | 106684369 | A | 17 May 2017 | None | | | |
| CN | 111082058 | A | 28 April 2020 | None | | | |
| KR | 20200034298 | A | 31 March 2020 | KR | 102120071 | B1 | 08 June 2020 |

Form PCT/ISA/210 (patent family annex) (July 2022)